Europäisches Patentamt

European Patent Office

Office européen des brevets

(19)

(11) Numéro de publication: **0 018 294**
**B1**

(12) **FASCICULE DE BREVET EUROPEEN**

(45) Date de publication du fascicule du brevet:
**23.03.83**

(51) Int. Cl.³: **B 60 R 1/06**

(21) Numéro de dépôt: **80400541.1**

(22) Date de dépôt: **21.04.80**

(54) **Support pour un bras rabattable de rétroviseur extérieur.**

(30) Priorité: **23.04.79 FR 7910187**

(43) Date de publication de la demande:
**29.10.80 Bulletin 80/22**

(45) Mention de la délivrance du brevet:
**23.03.83 Bulletin 83/12**

(84) Etats contractants désignés:
**AT BE CH DE FR GB IT LI LU NL SE**

(56) Documents cités:
**DE-B-1 480 106**
**FR-A-1 237 231**
**GB-A-1 496 001**
**US-A-4 135 694**

(73) Titulaire: **SOCIETE COMMERCIALE DU COMPTOIR DES INVENTIONS PRATIQUES POUR L'AUTOMOBILE C.I.P.A., 25 rue du Télégraphe, F-75020 Paris (FR)**

(72) Inventeur: **Bertaux, Gérard, 30 rue du Borrégo, F-75020 Paris (FR)**

(74) Mandataire: **Casanova, André et al, CABINET ARMENGAUD JEUNE CASANOVA, AKERMAN, LEPEUDRY 23 boulevard de Strasbourg, F-75010 Paris (FR)**

EP 0 018 294 B1

## Support pour un bras rabattable de rétroviseur extérieur

La présente invention concerne un support pour un bras rabattable de rétroviseur extérieur.

On sait que la réglementation actuelle impose aux rétroviseurs extérieurs des véhicules d'être rabattables, pour n'opposer qu'une faible résistance aux obstacles éventuellement rencontrés lors de la marche du véhicule.

Dans le cas en outre des véhicules lourds, le rabattement, contre la carrosserie du véhicule, des larges rétroviseurs extérieurs est parfois nécessaire pour certaines manoeuvres du véhicule.

On connaît déjà un grand nombre de supports pour bras rabattables de rétroviseurs extérieurs, qui sont généralement aménagés de manière que la position normale de service du rétroviseur extérieur soit définie sans ambiguïté, par exemple par un encliquetage, afin de faciliter la remise en service du rétroviseur après chaque rabattement.

Le brevet GB-A-1 496 001 décrit un tel support, comprenant une pièce de fixation au véhicule, qu'un axe d'articulation, solidaire du bras rabattable, du rétroviseur, traverse par l'intermédiaire d'un trou, la pièce de fixation étant pourvue d'éléments d'immobilisation en rotation d'une goupille radiale ou diamétrale, solidaire de l'axe d'articulation, tandis qu'un organe élastique exerce sur ce dernier une force tendant à appliquer la goupille vers les éléments d'immobilisation en rotation.

La pièce de fixation est constituée d'un corps moulé dont la partie inférieure sensiblement tronconique, est percée du trou axial formant palier pour l'axe d'articulation, et dont la partie supérieure creuse, sensiblement cylindrique, reçoit une plaque annulaire munie de deux protubérances axiales diamétralement opposées, dans lesquelles ont été usinées des gorges en V, dont les flancs constituent les organes d'immobilisation en rotation de la goupille solidaire de l'axe, ainsi qu'une seconde goupille, retenant dans le corps une première coupelle d'appui de l'organe élastique, sollicitant une seconde coupelle solidaire de l'axe, et ce corps moulé présente une protubérance latérale, en forme de caisson ouvert, pour le passage de moyens amovibles de fixation du corps sur une embase de fixation sur le véhicule.

Dans cette réalisation, la pièce de fixation est donc un élément de structure complexe et de réalisation coûteuse, et le support est constitué d'un nombre important d'éléments.

Comme d'ailleurs, les autres dispositifs connus de ce type, ce support n'est donc pas parfaitement satisfaisant, car il ne présente pas une simplicité suffisante pour allier une grande fiabilité à un faible prix de revient.

Pour pallier ces inconvénients, le support selon la présente invention se caractérise en ce que la pièce de fixation est une équerre, dont une aile, dans laquelle est percé le trou traversé par l'axe d'articulation, est pourvue des éléments d'immobilisation en rotation, formés par les flancs d'au moins un embouti ménagé radialement, au bord du trou, dans cette aile de l'équerre.

Le support selon l'invention est d'une réalisation particulièrement simple, puisqu'il comprend un très faible nombre de pièces distinctes de forme simple; son prix de revient est par suite faible et sa fiabilité élevée.

A titre d'exemple, on a décrit ci-dessous et illustré schématiquement au dessin annexé une forme de réalisation de l'invention.

La figure 1 montre en élévation un rétroviseur rabattable pour camion ou autocar.

La figure 2 est une vue, en coupe partielle par un plan vertical, de l'articulation inférieure du rétroviseur rabattable illustré sur la figure 1.

La figure 3 est une vue en coupe suivant la ligne III-III de la figure 2.

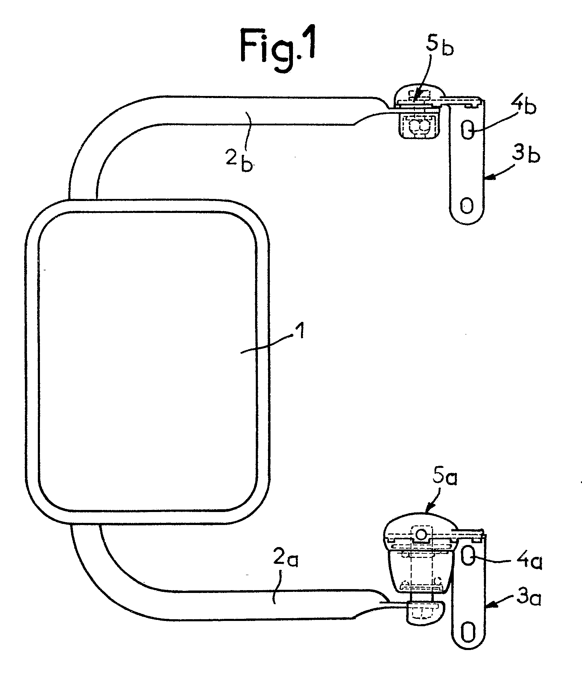

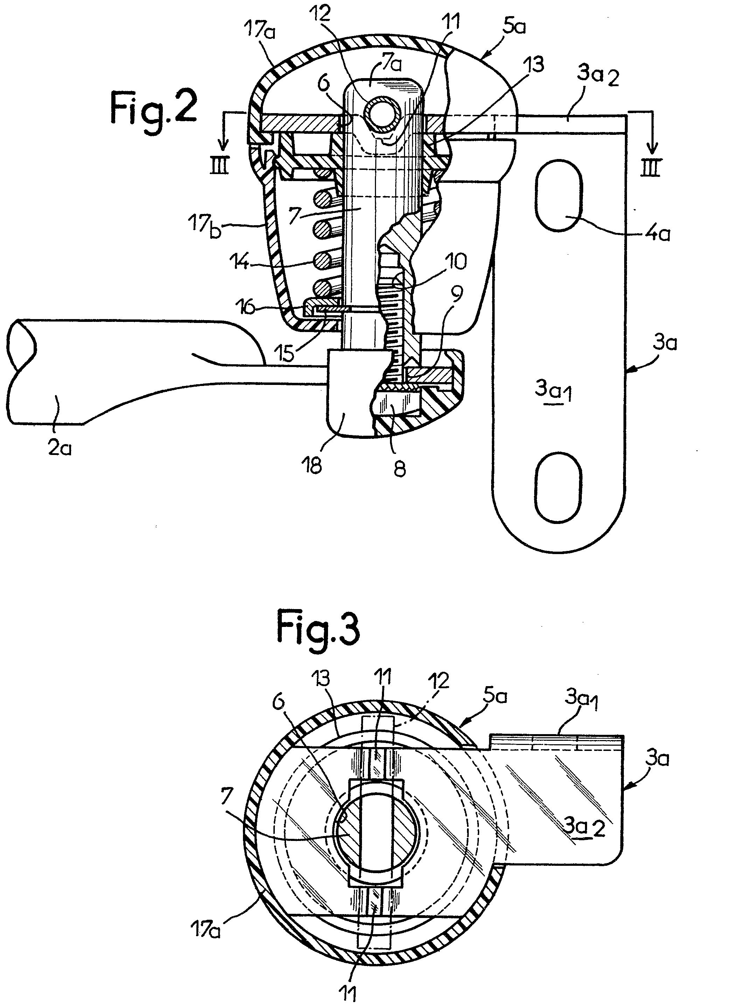

Sur la figure 1, 1 désigne un miroir de grande surface, qui est porté par un bras inférieur 2a et un bras supérieur 2b. Les extrémités des deux bras 2a et 2b sont elles-mêmes articulées sur les ailes supérieures de deux pièces de fixation en forme d'équerre, 3a et 3b, qui sont par exemple assujetties à des éléments de la carrosserie du véhicule par des vis engagées dans des ouvertures telles que 4a, 4b. Alors que l'articulation, 5b, du bras supérieur, 2b, sur l'aile supérieure de l'équerre 3b, est d'un type classique, qu'il n'est pas nécessaire de décrire en détail, l'articulation, 5a, du bras inférieur, 2a, sur l'aile supérieure de l'équerre 3a est réalisée, selon la présente invention, comme illustré aux figures 2 et 3.

Comme visible en particulier sur la figure 2, l'équerre de fixation 3a, de préférence métallique, comprend une aile verticale, 3a1, dans laquelle sont aménagés les trous de fixation tels que 4a, et une aile horizontale, 3a2, pourvue d'un trou 6 pour le passage de l'extrémité supérieure 7a d'un axe 7, solidaire du bras 2a du rétroviseur. Dans la forme de réalisation considérée, l'extrémité du bras 2a est aplatie, et elle est assujettie à l'extrémité inférieure de l'axe 7 par une vis 8, traversant un trou 9 de l'extrémité aplatie du bras 2a, et engagée dans un trou borgne, taraudé, 10, de ladite extrémité inférieure de l'axe 7. Sur la face de l'aile 3a2 de l'équerre 3a, qui est opposée au bras 2a du rétroviseur, des emboutis, 11, sont aménagés radialement au bord du trou circulaire 6, comme visible sur la figure 3. Une goupille 12 traverse diamétralement l'extrémité supérieure 7a de l'axe 7, au-dessus de l'aile 3a2 de l'équerre 3a et notamment de ses emboutis radiaux 11. Sur la face de l'aile supérieure 3a2 de l'équerre 3a, qui est tournée vers le bras 2a du rétroviseur est appliqué, concentriquement au trou circulaire 6, un palier 13 pour l'axe 7 du rétroviseur; il peut s'agir d'une pièce annulaire en matière synthétique moulée, dont la section par un plan radial a la forme visible sur la partie gauche de la figure 2. D'autre part, un ressort hélicoïdal 14 est enfilé sur la partie médiane de l'axe 7, de manière à être comprimé en prenant appui, d'un côté, sur la face inférieure de palier annulaire 13, et, de l'autre côté, sur au moins une saillie radiale de l'axe 7; dans la forme de·réalisation illustrée, cette saillie radiale est matérialisée par un circlips 15, fixé dans une rainure annulaire de l'axe 7, et retenant une coupelle de maintien 16.

Dans la forme de réalisation illustrée sur les figures 2 et 3, un boîtier démontable, en deux parties, 17a et 17b, par exemple en matière synthétique moulée, enveloppe l'axe 7, le palier 13, le ressort 14, ainsi que la partie correspondante de l'aile supérieure 3a2 de l'équerre 3a.

Le ressort comprimé 14, prenant appui sur l'aile horizontale 3a2 de l'équerre 3a, par l'intermédiaire du palier 13, exerce une poussée descendante sur l'axe 7 du rétroviseur, qui a pour effet d'engager la goupille diamétrale 12 dudit axe dans les deux emboutis 11 de la face supérieure de ladite aile 3a2, si bien que les flancs de chaque embouti 11 immobilisent en rotation la goupille 12 et l'axe 7 lorsque le rétroviseur 1 occupe sa position de service. Le rétroviseur peut cependant être facilement rabattu contre le véhicule par l'application d'une force faible, mais suffisante pour accroître la compression du ressort hélicoïdal 14 et faire sortir la goupille 12 des emboutis 11.

La présente invention n'est pas limitée à la forme de réalisation précédemment décrite. Elle englobe notamment les variantes suivantes. Les emboutis 11 peuvent aussi être aménagés dans la face inférieure de l'aile 3a2 de l'équerre 3a, un organe élastique tel que le ressort hélicoïdal 14 étant alors disposé de manière à exercer sur l'axe 7 du rétroviseur une force ascendante, qui, dans la position de service du rétroviseur, pousse la goupille 12 dudit axe 7 dans les emboutis 11 mentionnés; l'organe élastique peut être alors notamment un ressort hélicoïdal tendu, ou un autre organe élastique, de fonction équivalente. Le boîtier et notamment sa partie supérieure 17a, est facultatif. Par contre, un capot protecteur, 18, par exemple aussi en matière synthétique moulée, peut être prévu autour de la tête de la vis de fixation 8. La réalisation du palier 13, et le matériau qui le constitue sont matières à option. La goupille diamétrale 12 de l'axe 7 peut être remplacée par une demi-goupille, radiale, destinée à coopérer avec un embouti, 11, unique. Le ou les emboutis 11 peuvent être remplacés par des éléments de fonction équivalente, en particulier indépendants de l'aile 3a2 de l'équerre 3a, et fixés sur l'une de ses deux faces, par des moyens appropriés, notamment par soudure, collage, vissage ... etc. La forme de l'équerre de fixation 3a est également matière à option; son aile verticale, 3a1, peut par exemple être sensiblement triangulaire.

## Revendications

1. Support pour un bras rabattabel (2a) de rétroviseur extérieur (1), comprenant une pièce (3a) de fixation au véhicule, qu'un axe d'articulation (7), solidaire du bras rabattable (2a) du rétroviseur (1), traverse par l'intermédiaire d'un trou (6), la pièce de fixation (3a) étant pourvue d'éléments d'immobilisation en rotation d'une goupille (12) radiale ou diamétrale, solidaire de l'axe d'articulation (7), tandis qu'un organe élastique (14) exerce sur ce dernier une force tendant à appliquer la goupille (12) vers les éléments d'immobilisation en rotation, caractérisé en ce que la pièce de fixation est une équerre (3a), dont une aile (3a2), dans laquelle est percé le trou (6) traversé par l'axe d'articulation (7), est pourvue des éléments d'immobilisation en rotation, formés par les flancs d'au moins un embouti (11) ménagé radialement, au bord du trou (6), dans l'aile (3a2) de l'équerre (3a).

2. Support selon la revendication 1, caractérisé en ce que les éléments d'immobilisation (11) en rotation de la goupille (12), sont prévus sur la face de l'aile (3a2) de l'équerre (3a) de fixation, qui est opposée au bras rabattable (2a), et que l'organe élastique est un ressort (14) hélicoïdal comprimé, qui est infilé sur l'axe d'articulation (7) et qui prend appui, d'un côté, sur un palier (13), de préférence en matière synthétique, appliqué lui-même sur l'autre face de l'aile (3a2) de l'équerre (3a), concentriquement au trou (6) de passage dudit axe (7), et, de l'autre côté, sur au moins une saillie radiale (15, 16) de cet axe (7).

3. Support selon l'une quelconque des revendications 1 et 2, caractérisé en ce qu'un boîtier démontable (17a, 17b), par exemple en matière synthétique, enveloppe l'axe d'articulation (7) et son palier (13), ainsi éventuellement que la partie correspondante de l'aile (3a2) de l'équerre (3a).

## Patentansprüche

1. Halter für den umlegbaren Arm (2a) eines Außenrückspiegels (1), der zur Befestigung am Fahrzeug ein Verbindungsstück (3a) besitzt, welches von einer Schwenkachse (7), die mit dem umlegbaren Arm (2a) des Rückspiegels (1) fest verbunden ist, vermittels einer Öffnung (6) durchgriffen ist, wobei das Verbindungsstück (3a) mit Elementen versehen ist, die zusammen mit einem radialen oder diametralen, mit der Schwenkachse (7) fest verbundenen Stift (12) zur Sicherung gegen eine Drehbewegung dienen, während ein elastisches Organ (14) auf die Schwenkachse (7) eine Kraft ausübt, die den Stift (12) gegen die zur Sicherung gegen eine Drehbewegung dienenden Elemente anzudrükken sucht, dadurch gekennzeichnet, daß das Verbindungsstück ein Winkelstück (3a) ist, dessen einer Schenkel (3a2), in dem die von der Schwenkachse (7) durchgriffene Öffnung (6) ausgespart ist, mit den zur Sicherung gegen die Drehbewegung dienenden Elementen versehen ist, welche durch die Seitenflanken mindestens einer eingedrückten Vertiefung (11) gebildet sind, die am Rande der Öffnung (6) im Schenkel (3a₂) des Winkelstücks (3a) radial angeordnet ist.

2. Halter nach Anspruch 1, dadurch gekennzeichnet, daß die Elemente (11), die mit dem Stift (12) zur Sicherung gegen eine Drehbewegung dienen, an derjenigen Seite des Schenkels (3a₂) des zur Befestigung dienenden Winkelstücks (3a) vorgesehen sind, die dem umlegbaren Arm (2a) entgegengesetzt ist, und daß das elastische Organ eine zusammengepreßte Schraubenfeder (14) ist, die auf der Schwenkachse (7) angeordnet ist, sich mit ihrem einen Ende an einem vorzugsweise aus Kunststoff gefertigten, zu der für den Durchtritt der Schwenkachse (7) vorgesehenen Öffnung (6) konzentrischen Gegenlager (13) abstützt, das seinerseits auf die andere Seite des Schenkels (3a₂) des Winkelstücks (3a) drückt, und sich mit ihrem anderen Ende an zumindest einem radialen Vorsprung (15, 16) der Schwenkachse (7) abstützt.

3. Halter nach Anspruch 1 oder 2, dadurch gekennzeichnet, daß ein zerlegbares Gehäuse (17a, 17b), beispielsweise aus Kunststoff, die Schwenkachse (7) und ihr Gegenlager (13) sowie gegebenenfalls den entsprechenden Teil des Schenkels (3a₂) des Winkelstücks (3a) umschließt.

### Claims

1. Support for a pivotable arm (2a) of an outside rear-view mirror (1), comprising a part (3a) for attachment to the vehicle, through which part passes via a hole (6) a hinge spindle (7) which is rigid with the pivotable arm (2a) of the rear-view mirror (1), the attachment part (3a) being provided with elements for securing against rotational motion a radial or diametrical pin (12) which is securely fixed to the pivot spindle (7), whereas a resilient member (14) exerts on the latter a force tending to apply the pin (12) towards the elements for securing against rotational motion, characterised in that the attachment part is a right-angle bracket (3a) of which one flange (3a₂), in which is bored the hole (6) traversed by the pivot spindle (7), is provided with the elements for securing against rotational motion, which elements are formed by the sides of at least one pressing (11) provided radially at the rim of the hole (6) in the flange (3a₂) of the right-angle bracket (3a).

2. Support according to claim 1, characterised in that the elements (11) for securing the pin (12) against rotational motion are provided on the side of the flange (3a₂) of the attachment right-angle bracket (3a) which is opposite the pivotable arm (2a), and that the resilient member is a compressed helical spring (14) which is fitted on the pivot spindle (7) and which bears, at one end, against a bearing (13), preferably made of synthetic material, itself applied against the other side of the flange (3a₂) of the right-angle bracket (a), concentrically with the hole (6) for the passage of said spindle (7), and, at the other end, against at least one radial projection (15, 16) of this spindle (7).

3. Support according to any one of the claims 1 and 2, characterised in that a detachable housing (17a, 17b), for example made of synthetic material, encloses the pivot spindle (7) and its bearing (13) as well as, if necessary, the corresponding part of the flange (3a₂) of the right-angle bracket (3a).

# Fig.1

# Fig.2

# Fig.3